# FASCICULE DE BREVET EUROPEEN

(11) **EP 1 356 743 B1**
(45) Date de publication et mention de la délivrance du brevet: **29.06.2011**
(21) Numéro de dépôt: 02076611.9
(22) Date de dépôt: 23.04.2002
(51) Int. Cl.: A23G 9/28, A23P 1/12, A21C 11/16

(54) **Procédé et appareil de fabrication d'articles de confiserie glacée décorés**
Verfahren und Vorrichtung zur Herstellung von dekoriertem Eiskonfekt
Process and apparatus for making decorated frozen confectionery

(43) Date de publication de la demande: 29.10.2003
(73) Titulaire: SOCIETE DES PRODUITS NESTLE S.A., 1800 Vevey (CH)
(72) Inventeur: Thomas, Rémi, 60390 Berneuil en Bray (FR); Dufort, Christian, 60000 Beauvais (FR); Tence, Jean-Francois, 60580 Coye La Foret (FR)
(74) Mandataire: Rossand, Isabelle

(56) Documents cités:
- EP-A- 0 328 170
- DE-A- 3 910 985
- DE-C- 3 436 578
- GB-A- 2 120 516
- US-A- 4 542 028
- US-A- 4 751 878
- US-A- 4 828 854
- US-A- 4 913 645
- US-A- 5 000 969
- PATENT ABSTRACTS OF JAPAN vol. 011, no. 008 (C-396), 9 janvier 1987 (1987-01-09) -& JP 61 187751 A (YAZAWA KAKI KOGYO KK), 21 août 1986 (1986-08-21)

## Description

L'invention se rapporte au domaine des articles de confiserie glacée décorés, notamment des gâteaux glacés avec un décor attractif complexe évoquant le style "art nouveau".

L'application de l'extrusion continue à la fabrication de gâteaux de confiserie glacée décorés est connue.

La méthode usuelle consiste à déposer un boudin continu de crème glacée sur un tapis transporteur en défilement. Le boudin peut être ensuite décoré par dépose d'éléments décoratifs continus ou discontinus, par exemple d'éléments continus au moyen de dispositifs annexes d'extrusion comprenant des buses fixes situées tangentiellement au boudin, par exemple animées d'un mouvement de va-et-vient dans un plan parallèle à l'axe du boudin. La décoration obtenue n'est pas très variée.

Dans le but d'apporter des nouvelles formes, EP-A-0 044 689, par exemple, concerne un procédé et un appareil de fabrication de gâteaux glacés utilisant un joint tournant permettant l'extrusion en continu de boudins torsadés multicolores de crème glacée, c'est à dire de produits dans lesquels la masse de crème glacée elle-même constitue l'élément décoratif de par sa forme. La construction d'une tête rotative d'extrusion est relativement compliquée: des joints entre les pièces mobiles et les pièces fixes doivent être prévus au niveau même de la buse ainsi qu'un méchanisme d'entraînement des pièces mobiles. Une telle tête est encombrante et difficile à nettoyer.

EP-A-0 328 170, par exemple, se rapporte à un dispositif décorateur pour gâteaux glacés mettant également en oeuvre une tête rotative comportant un joint tournant mû par un automate programmable. Dans une forme d'exécution, le dispositif permet de réaliser un décor plissé sur des gâteaux ronds en jouant sur les débits relatifs de crème glacée et la vitesse de rotation du joint tournant du distributeur.

Dans le même but, EP-A-0 234 376 concerne un appareil de fabrication de boudins décorés de produits pâteux ne comportant pas de buse rotative, dans lequel on extrude en continu de la crème glacée à partir d'une buse solidaire d'un support mobile placé au dessus d'un tapis transporteur défilant, les mouvements relatifs de la buse et du tapis transporteur étant tels que l'on reproduit le mouvement qu'un pâtissier imprime à une douille de décoration pour former un boudin continu régulièrement enroulé.

EP-A-0 366 978, par exemple, concerne également la confection de gâteaux glacés décorés sans utilisation de joint tournant, dans lesquels la masse de crème glacée extrudée elle-même constitue le décor, consistant à réaliser une superposition de couches de rubans plats de crème glacée par une buse plate située au dessus d'un tapis transporteur défilant lentement et parallèle à celui-ci, en utilisant la vitesse rapide d'extrusion de la crème glacée relativement au mouvement lent du tapis transporteur, ce qui conduit à déposer par gravité des rubans plissés se recouvrant à la manière des pièces de tissus venant d'un métier à tisser. Les formes obtenues ne sont pas très décoratives.

On constate que jusqu'à présent, on ne connait pas de procédé ou de dispositif de fabrication en continu de gâteaux glacés décorés de forme complexe rapellant certains décors de l'art nouveau, par exemple ceux réalisés par l'architecte Gaudi.

Le but de l'invention est la fabrication en continu et de façon simple de gâteaux glacés décoratifs intégrant un décor complexe.

L'invention concerne donc un procédé de fabrication d'un gâteau glacé selon la revendication 1.

Dans le contexte de l'invention, un ajutage en forme de fente d'une buse aplatie a un contour contenu dans un plan représentant le plan de l'ajutage. La projection de ce plan sur un plan vertical parallèle à la direction de défilement et perpendiculaire au plan du support défilant selon une droite qui fait un angle aigu d'au moins 45°, et de préférence un angle allant jusqu'à 85°, par exemple d'environ 75° à 85° avec l'horizontale dans ledit plan de projection, vu dans le sens de défilement du support. Celà est réalisé dans la forme d'exécution particulière de l'invention représentée au dessins en inclinant la buse la plus éloignée du support défilant, soit la buse supérieure, d'un angle obtu de 175° à 135 ° par rapport à l'horizontale; vu dans le sens de défilement du support. On pourrait arriver à un résultat voisin sans sortir du contexte de l'invention à partir d'une buse supérieure dont l'axe serait horizontal et dont l'ajutage de sortie serait biseauté de manière que le plan de l'ajutage présente la même orientation.

De préférence, l'on extrude deux rubans de composition glacée à partir de deux buses mobiles aplaties sensiblement orthogonales l'une par rapport à l'autre au niveau de leurs ajutages de sortie.

Dans un mode de réalisation particulièrement avantageux, les buses aplaties sont disposées de manière que leurs ajutages forment un T inversé.

Pour souligner le plissé en forme de volant frisé le ruban de composition glacée déposé en dernier peut de préférence comporter un liseré de sauce en bordure produisant un contraste visuel avec ledit ruban.

Selon l'invention, il est essentiel que la forme donnée au décor persiste sans déformation aussi bien pendant la fabrication que lors de la distribution des articles étant donné la grande surface du décor exposée à l'air environant. Il est donc nécessaire de fabriquer un extrudat particulièrement résistant aux chocs thermiques. Pour ce faire, on réalise l'extrusion à froid, à une température de sortie la plus froide possible, inférieure ou égale à - 6° C et de préférence inférieure à - 10° C, de glace dure, obtenue par exemple par durcissement au moyen d'un dispositif d'extrusion bivis, le cas échéant associé à un freezer, tel que décrit par exemple dans EP-A-0 561 118 ou sans freezer tel que décrit dans EP-A-0 713 650.

L'invention concerne également un gâteau glacé décoré dans lequel le décor est sous la forme d'un volant frisé replié sur lui-même dont les plis vont alternativement dans un sens puis en sens contraire susceptible d'être obtenu par le procédé selon l'invention.

Un tel gâteau peut comprendre une masse de biscuit, de préférence extrudée à température négative, par exemple telle que décrite dans la demande de brevet de la titulaire déposée le même jour sous le titre "Biscuit extrudable à température négative, procédé de préparation et utilisation dans des produits de confiserie glacée composites".

Enfin, l'invention concerne un dispositif de fabrication d'un gâteau glacé comportant un décor intégré de confiserie glacée déposé sous la forme d'un volant frisé replié sur lui-même dont les plis vont alternativement dans un sens puis en sens contraire par extrusion à partir d'un ensemble mobile de deux buses à embout aplati avec ajutage en fente placé au dessus d'un support défilant, caractérisé par le fait qu'il comprend:
- Une source de composition glacée froide fournissant au moins un ruban extrudé de composition glacée à température inférieure ou égale à - 6° C,
- Un support de l'ensemble de buses mobile animé d'un mouvement oscillant transversalement par rapport au support défilant,
- Des moyens de mise en mouvement du support oscillant, que la buse la plus éloignée du support défilant est placée de manière telle que la projection du plan de l'ajutage de la dite buse sur un plan parallèle à la direction de défilement du support défilant et perpendiculaire au plan dudit support défilant fait, vu dans le sens de défilement dudit support, un angle aigu d'au moins 45° avec la projection du support défilant sur ledit plan, que la vitesse d'extrusion de la composition glacée est supérieure à la vitesse de déplacement du support défilant et que les mouvements respectifs de la ou des buse(s) et du support défilant sont tels que le ruban déposé par gravité a la forme d'un volant frisé replié sur lui-même dont les plis vont alternativement dans un sens puis en sens contraire.

Selon l'invention, le dispositif comprend deux buses placées l'une au dessus de l'autre, dont l'une est inclinée par rapport à l'autre, qui sont articulées entre elles et dont l'angle d'inclinaison par rapport à l'horizontale peut être ajusté par un moyen de réglage. De préférence, les axes des buses font entre eux un angle de 5° à 15°.

Avantageusement, le support oscillant comprend une première console sur laquelle est fixée la buse inférieure et sur laquelle est articulée la buse supérieure par l'intermédiaires d'un bras de longeur réglable. La position de la buse supérieure par rapport à la buse inférieure peut être réglée par l'intermédiaire dudit bras de longeur réglable articulé à ses deux extrémités

De préférence, les moyens de mise en mouvement du support oscillant comprennent:
- une glissière verticale mobile solidaire dudit support oscillant par l'intermédiaire d'une première console,
- un ensemble de galets entre lesquels la glissière coulisse, lesdits galets étant fixés sur un boîtier,
- une seconde console de fixation de la glissière et
- une manivelle à levier réglable dont l'arbre d'entraînement est relié à un moteur et dont l'oeil est articulé sur la seconde console.

L'invention sera mieux comprise à l'aide de la description détaillée ci-après faite en regard des dessins ci-après donnés à titre d'exemple dans lesquels:
La figure 1 est une vue schématique d'ensemble de l'appareil,
La figure 2 est une vue de détail de l'ensemble de buses d'extrusion et de leur support oscillant,
Les figures 3 et 4 sont des vues en coupe selon AA et BB de la figure 2,
Les figures 5, 6 et 7 sont des vues, pour la figure 5 en élévation et en coupe partielle selon D de la figure 6, respectivement pour la figure 6 vu de dessus et en coupe partielle selon C de la figure 5 et pour la figure 7 vu de l'arrière et en coupe partielle selon E de la figure 6 (représentée à une échelle agrandie par rapport aux figures 5 et 6 pour plus de clarté) des moyens de transmission du mouvement oscillant au support et
La figure 8 est une vue en perspective d'une portion de gâteau glacé.

Dans ces figures, les mêmes chiffres de référence désignent les mêmes éléments.

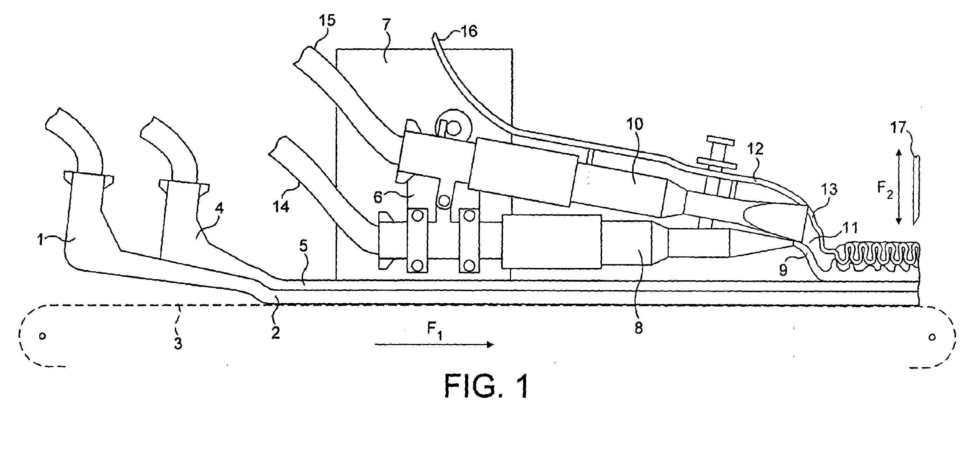

A la figure 1, on extrude par une buse à embout aplati 1 un ruban plat de biscuit reconstitué 2 sur un tapis tranporteur 3 en défilement dans la direction de la flèche f1. A partir de la buse à embout plat 4, on extrude un ruban plat de crème glacée 5 provenant d'un freezer non représenté sur le biscuit servant de base. De manière avantageuse, le biscuit est extrudé à température négative, par exemple à environ - 5° C.

Un ensemble de buses articulées entre elles est fixé sur un support oscillant 6 mû par un mécanisme contenu dans un boîtier 7. L'ensemble de buses comprend une première buse 8 à embout aplati dont l'ajutage en fente est sensiblement parallèle au tapis transporteur 3, par laquelle on extrude un ruban de crème glacée 9. L'ensemble de buses comprend une seconde buse 10 à embout aplati, dont l'ajutage en fente est sensiblement perpendiculaire au tapis transporteur 3, par laquelle on extrude un ruban de crème glacée 11. Fixé à la buse 10, un conduit de faible section 12 délivre un boudin de sauce 13. Le conduit 12 débouche à l'extrémité supérieure de l'embout aplati à travers sa paroi, ce qui permet de confectionner un liseré de sauce sur la tranche supérieure du ruban 11 par co-extrusion. Les buses mobiles 8 et 10, ainsi que le conduit 12 sont reliés aux sources des produits respectifs par des tuyaux souples 14, 15 et 16. Après dépose du boudin décoratif composite sur les couches en défilement, l'ensemble est découpé en portions par le couteau 17 animé d'un mouvement de monte et baisse suivant la flèche f2.

Les portions sont alors acheminées vers un tunnel de durcissement, durcies et ensuite emballées pour être entreposées à une température < - 18° C, ces opérations n'étant pas représentées.

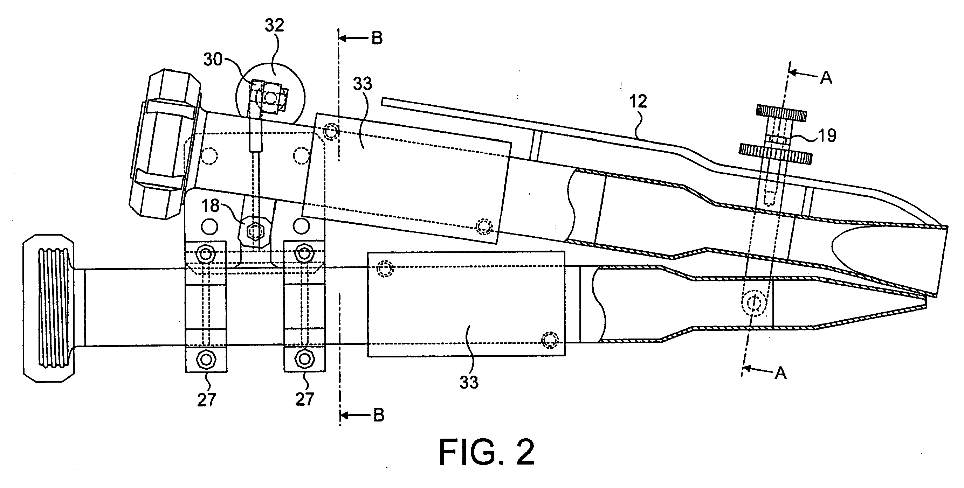

Comme montré aux figures 2, 3 et 4, les buses 8 et 10 sont articulées entre elles autour de l'axe de pivotement 18 et leur angle d'inclinaison longitudinale l'une par rapport à l'autre peut être réglé au moyen de la molette 19. Cette molette traverse l'étrier 20 dans sa partie supérieure et agit sur un écrou fileté 21 porté par la buse 10. Deux boulons de serrage 22, 23 traversent les branches de l'étrier 20 et coopérent avec des écrous filetés 24, 25 fixés de chaque côté de la buse 8 pour servir d'axe de fixation pivotant de l'étrier 20 à la buse 8. La molette 19 assure que les buses soient mantenues séparées de manière à éviter les points froids qui pourraient perturber l'écoulement des rubans de crème glacée.

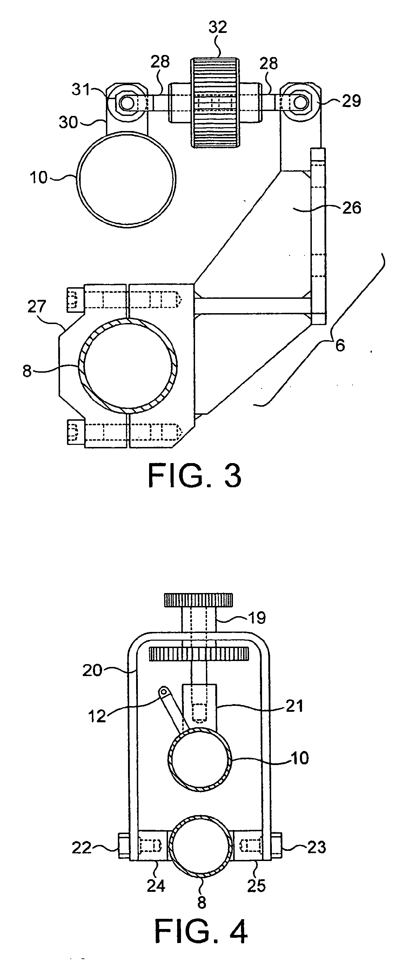

Tel que montré à la figure 3, le support oscillant 6 est constitué d'une première console 26. La console 26 porte dans sa partie basse des bagues de serrage 27 permettant la fixation de la buse 8. A la partie supérieure de la console 26, une tige de liaison 28 la relie à la buse 10. Le bras 28 est articulé à ses deux extrémités, d'une part sur la console 26 autour de l'axe de pivotement 29 et d'autre part sur une patte 30 fixée à la buse 10 autour de l'axe de pivotement 31. Une mollette 32 permet de régler la longueur de la tige 28. Ainsi, on peut opérer un réglage fin de la position latérale de la buse 10 par rapport à la buse 8.

Des manchons 33 dans lesquels circule un fluide servent d'échangeur thermique. Ils permettent de réchauffer légèrement en surface la crème glacée pour favoriser son écoulement et diminuer la contre pression exercée sur l'appareil d'extrusion tel qu'un durcisseur bivis. Ces manchons pourraient le cas échéant servir au contraire à refroidir la crème glacée en surface dans le cas où l'écoulement serait devenu trop important et si c'est compatible avec la perte de charge subie par l'extrudeur.

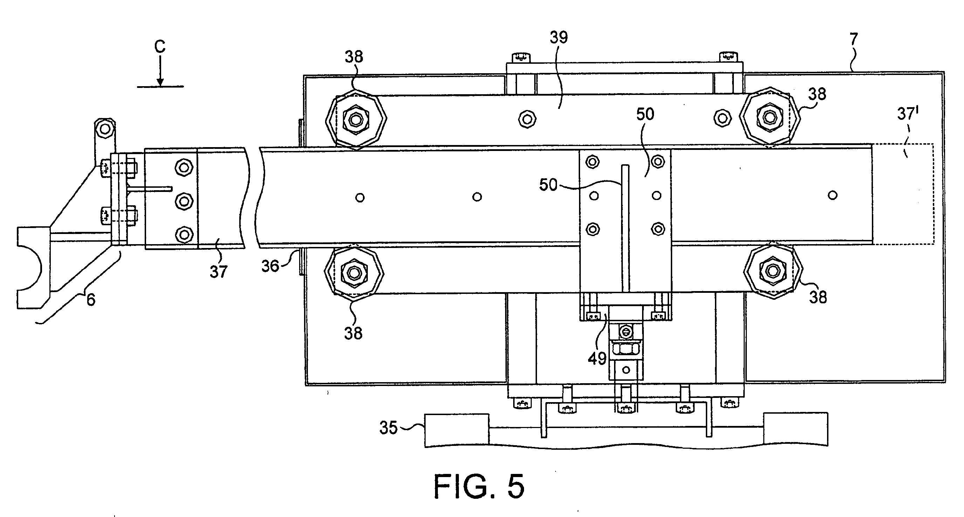

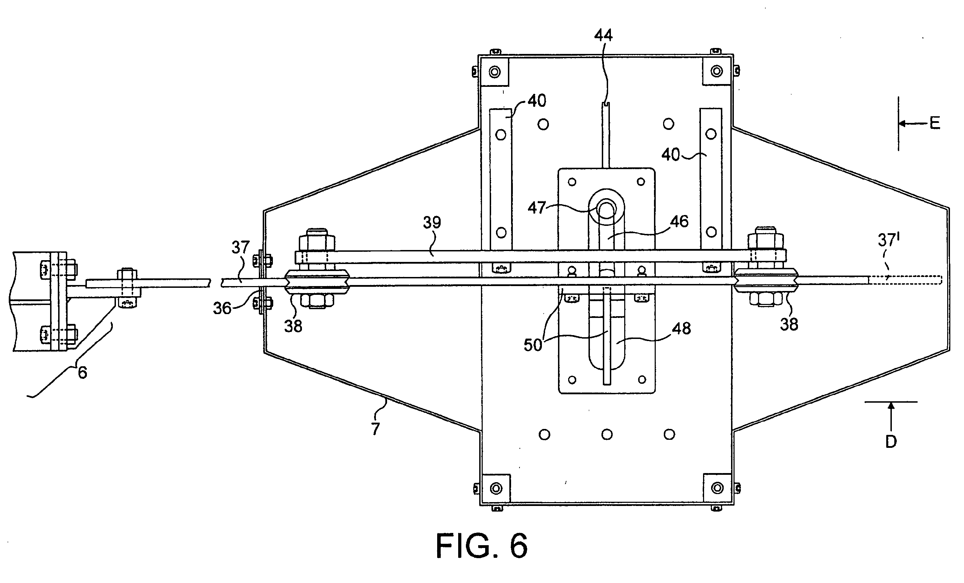

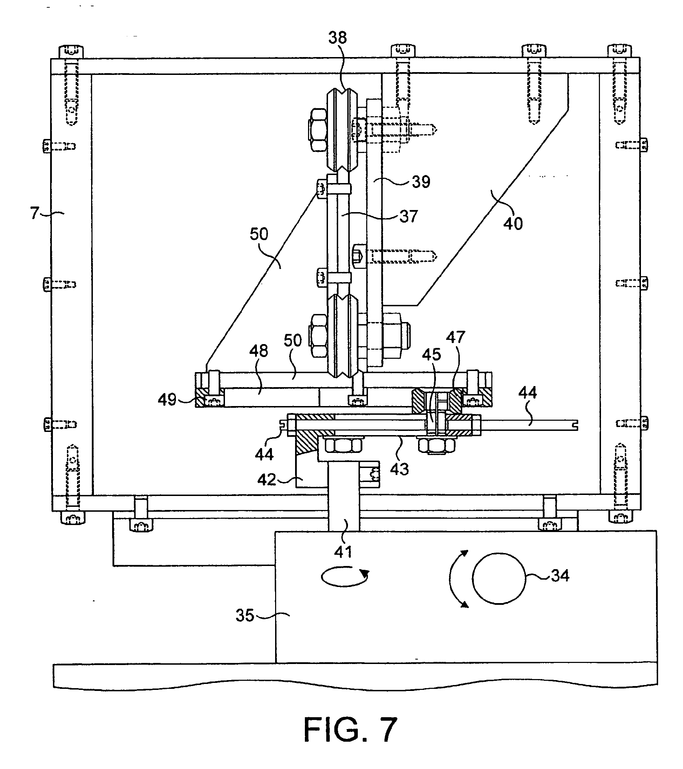

Le support oscillant 6 est mis en mouvement d'oscillation transversale par rapport au tapis transporteur 3. Tel que représenté aux figures 5, 6 et 7, le mécanisme de mise en mouvement est contenu dans le boîtier 7 qui est monté pivotant autour de l'axe 34 sur un bâti 35. On peut ainsi régler l'inclinaison du support oscillant et des buses par rapport au tapis tranporteur 3. Une fente 36 est ménagée dans le boîtier 7 par laquelle passe la glissière 37 à laquelle est fixé le support oscillant 6 (représenté seulement partiellement aux figures 5 et 6).

La glissière 37 coulisse entre un ensemble de quatre galets 38. La glissière 37 peut rouler librement entre les galets 38, ce qui permet le déplacement latéral du support 6. Les galets 38 sont portés par la plaque 39, laquelle est fixée au plafond du boîtier 7 par l'intermédiaire des équerres 40.

Le mécanisme d'entraînement proprement dit comprend un moteur (non représenté) qui actionne l'arbre 41 en rotation continue via un variateur (non représenté). A l'arbre 41 est fixée une manivelle 42 dont le levier 43 est réglable par l'intermédiaire des vis 44 qui viennent s'appuyer sur le goujon 45 qui peut, avant serrage des vis 44, coulisser le long d'une lumière 46 ménagée dans le bras du levier 43.

Le goujon 45 vient se loger dans la roulette 47 montée sur roulement à billes et constitue l'oeil articulé de la manivelle 42. La roulette 47 sert de palier pour le goujon et en même temps peut rouler librement dans une gorge 48 oblongue ménagée dans une plaque 49, qui est elle-même fixée à une console 50. La console 50 est à son tour fixée à la glissière 37. L'ensemble de la roulette 47 et de la gorge 48 constitue ainsi la came d'entraînement de la glissière 37. Par réglage de la longueur du bras du levier 43, on peut régler l'amplitude de l'oscillation latérale du support 6 des buses. Sur les figures 5 et 6, on a montré la position médiane de la glissière en trait plein ainsi qu'une position extrême en pontillés 37'.

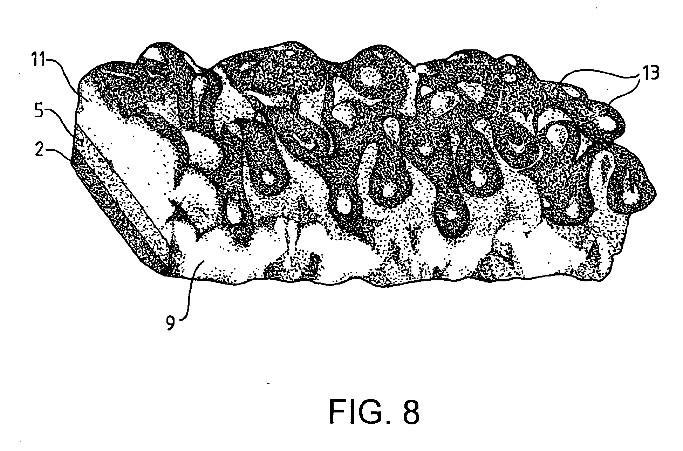

A la figure 8, une portion de gâteau comprend une première couche de biscuit 2, par exemple aromatisé à la fraise ou au chocolat, une couche de crème glacée 5 à la fraise, respectivement au chocolat contenant des petits morceaux de fraise, respectivement de chocolat, une couche de crème glacée à la vanille 9 déposée horizontalement en zig zag sur la couche 5, une couche de crème glacée à la vanille 11 déposée verticalement et formant des plis par gravité et un liseré de sauce à la fraise, respectivement au chocolat soulignant l'impression de volant plissé.

## Revendications

1. Procédé de fabrication d'un gâteau glacé comportant un décor intégré de confiserie glacée déposé par extrusion à partir de deux buses mobiles à embout aplati avec ajutage en fente placée au dessus d'un support défilant, les buses étant placées l'une au dessus de l'autre, dont l'une est inclinée par rapport à l'autre, qui sont articulées entre elles, et dont l'angle d'inclinaison par rapport à l'horizontale peut être ajusté par un moyen de réglage, **caractérisé par le fait:**
- **que** l'on extrude en continu une composition glacée sous forme de rubans à température inférieure à - 6° C au niveau des buses d'extrusion sur le support défilant,
- **que** les buses sont solidaires d'un support oscillant animé d'un mouvement oscillatoire transversal par rapport au support en défilement,
- **que** la buse la plus éloignée du support défilant est placée de manière telle que la projection du plan de l'ajutage de la dite buse sur un plan parallèle à la direction de défilement du support défilant et perpendiculaire au plan dudit support défilant fait, vu dans le sens de défilement dudit support, un angle aigu d'au moins 45° avec la projection du support défilant sur ledit plan;
- **que** la vitesse d'extrusion de la composition glacée est supérieure à la vitesse de déplacement du support défilant et
- **que** les mouvements respectifs des buses et du support défilant sont tels que le ruban déposé par gravité a la forme d'un volant frisé replié sur lui-même dont les plis vont alternativement dans un sens puis en sens contraire.

2. Procédé selon la revendication 1, **caractérisé par le fait que** l'on extrude deux rubans de composition glacée à partir de deux buses mobiles aplaties sensiblement orthogonales l'une par rapport à l'autre.

3. Procédé selon la revendication 2, **caractérisé par le fait que** les buses aplaties sont disposées de manière que leurs ajutages forment un T inversé.

4. Procédé selon la revendication 1, **caractérisé par le fait que** le ruban de composition glacée déposé en dernier comporte un liseré de sauce en bordure produisant un contraste visuel avec ledit ruban.

5. Procédé selon la revendication 1, **caractérisé par le fait que** l'on dépose le décor intégré sur un boudin de crème glacée et que l'on tronçonne le boudin composite obtenu en portions.

6. Procédé selon la revendication 1 ou 4, **caractérisé par le fait que** l'on dépose le décor intégré ou le boudin composite sur un biscuit et que l'on tronçonne l'ensemble boudin et biscuit en portions.

7. Procédé selon la revendication 5, **caractérisé par le fait que** biscuit est également extrudé.

8. Dispositif de fabrication d'un gâteau glacé comportant un décor intégré de confiserie glacée déposé sous la forme d'un volant frisé replié sur lui-même dont les plis vont alternativement dans un sens puis en sens contraire par extrusion à partir d'un ensemble mobile de deux buses à embouts aplatis avec ajutage en fente placé au dessus d'un support défilant, les deux buses étant placées l'une au dessus de l'autre, dont l'une est inclinée par rapport à l'autre, qui sont articulées entre elles, et dont l'angle d'inclinaison par rapport à l'horizontale peut être ajusté par un moyen de réglage, , **caractérisé par le fait qu'**il comprend:
- Une source de composition glacée froide fournissant au moins un ruban extrudé de composition glacée à température inférieure ou égale à - 6° C,
- Un support de l'ensemble de buses mobile animé d'un mouvement oscillant transversalement par rapport au support défilant,
- Des moyens de mise en mouvement du support oscillant, que la buse la plus éloignée du support défilant est placée de manière telle que la projection du plan de l'ajutage de la dite buse sur un plan parallèle à la direction de défilement du support défilant et perpendiculaire au plan dudit support défilant fait, vu dans le sens de défilement dudit support, un angle aigu d'au moins 45° avec la projection du support défilant sur ledit plan, que la vitesse d'extrusion de la composition glacée est supérieure à la vitesse de déplacement du support défilant et que les mouvements respectifs de la ou des buse(s) et du support défilant sont tels que le ruban déposé par gravité a la forme d'un volant frisé replié sur lui-même dont les plis vont alternativement dans un sens puis en sens contraire.

9. Dispositif selon la revendication 8, **caractérisé par le fait qu'**il comprend deux buses placées l'une au dessus de l'autre, dont l'une est inclinée par rapport à l'autre, qui sont articulées entre elles et dont l'angle d'inclinaison par rapport à l'horizontale peut être ajusté par un moyen de réglage.

10. Dispositif selon la revendication 8, **caractérisé par le fait que** le support oscillant comprend une première console sur laquelle est fixée la buse inférieure et sur laquelle est articulée la buse supérieure par l'intermédiaire d'un bras et que la position de la buse supérieure par rapport à la buse inférieure peut être réglée par l'intermédiaire dudit bras de longeur réglable articulé à ses deux extrémités.

11. Dispositif selon la revendication 8, **caractérisé par le fait que** l'ensemble de buses comprend deux buses mobiles à embout aplati sensiblement orthogonales l'une par rapport à l'autre.

12. Dispositif selon la revendication 11, **caractérisé par le fait que** les buses aplaties sont disposées de manière que leurs ajutages forment un T inversé.

13. Dispositif selon la revendication 8, **caractérisé par le fait que** la buse supérieure comprend un canal d'amenée de sauce intégré dans l'extrémité supérieure de l'embout.

14. Dispositif selon la revendication 8, **caractérisé par le fait que** les buses sont thermostatées par des manchons traversés par un fluide thermique.

15. Dispositif selon la revendication 8, **caractérisé par le fait que** les moyens de mise en mouvement du support oscillant comprennent:
- une glissière verticale mobile solidaire dudit support oscillant par l'intermédiaire d'une première console,
- un ensemble de galets entre lesquels la glissière coulisse, lesdits galets étant fixés sur un boîtier,
- une seconde console de fixation de la glissière et
- une manivelle à levier réglable dont l'arbre d'entraînement est relié à un moteur et dont l'oeil est articulé sur la seconde console.

## Claims

1. Method of manufacturing an ice cream dessert with built-in ice cream confectionery decoration deposited by extrusion from two moving nozzles with flattened end-piece with slot-shaped nozzle outlet which are placed above a moving support, the nozzles being placed one above the other, one of which is inclined with respect to the other, and which are articulated to one another and whose angle of inclination with respect to the horizontal can be adjusted using an adjusting means, **characterized:**
- **in that** an ice cream composition is extruded continuously in the form of ribbon(s) at a temperature of below -6°C at the extrusion nozzles onto the moving support,
- **in that** the nozzles are secured to an oscillating support given an oscillating movement transversal to the moving support,
- **in that** the nozzle furthest from the moving support is placed in such a way that the projection of the plane of the nozzle outlet of the said nozzle onto a plane parallel to the direction of travel of the moving support and perpendicular to the plane of the said moving support makes, when viewed in the direction of travel of the said support, an acute angle of at least 45° with the projection of the moving support onto the said plane,
- **in that** the speed at which the ice cream composition is extruded is greater than the speed of travel of the moving support, and
- **in that** the respective movements of the nozzles and of the moving support are such that the ribbon deposited under gravity has the shape of a gathered frill folded over on itself, the folds of which run alternately in one direction then in the opposite direction.

2. Method according to Claim 1, **characterized in that** two ribbons of ice cream composition are extruded from two flattened moving nozzles more or less orthogonal to one another.

3. Method according to Claim 2, **characterized in that** the flattened nozzles are arranged in such a way that their nozzle outlets form an inverted T.

4. Method according to Claim 1, **characterized in that** the ribbon of ice cream composition deposited last comprises an edging of sauce at the border, making a visual contrast with the said ribbon.

5. Method according to Claim 1, **characterized in that** the built-in decoration is deposited onto an extrudate of ice cream and **in that** the composite extrudate obtained is cut into portions.

6. Method according to Claim 1 or 4, **characterized in that** the incorporated decoration or the composite extrudate is deposited onto a sponge cake and **in that** the extrudate and sponge cake assembly is cut into portions.

7. Method according to Claim 5, **characterized in that** the sponge cake is also extruded.

8. Device for manufacturing an ice cream dessert comprising a built-in ice cream confectionery decoration deposited in the form of a gathered frill folded over on itself, the folds of which run alternately in one direction then in the opposite direction by extrusion from a moving set of two nozzles with flattened end-piece with slot-shaped nozzle outlet placed above a moving support, the two nozzles being placed one above the other, one of which is inclined with respect to the other, and which are articulated to one another and whose angle of inclination with respect to the horizontal can be adjusted using an adjusting means, **characterized in that** it comprises:
- a sauce of cold ice cream composition supplying at least one extruded ribbon of ice cream composition at a temperature of -6°C or below,
- a support for the set of moving nozzles which is given an oscillating movement transversely with respect to the moving support,
- means for setting the oscillating support in motion,
**in that** the nozzle furthest from the moving support is placed in such a way that the projection of the plane of the nozzle outlet of the said nozzle onto a plane parallel to the direction of travel of the moving support and perpendicular to the plane of the said moving support makes, when viewed in the direction of travel of the said support, an acute angle of at least 45° with the projection of the moving support onto the said plane,
**in that** the speed at which the ice cream composition is extruded is greater than the speed of travel of the moving support, and **in that**
the respective movements of the nozzle or nozzles and of the moving support are such that the ribbon deposited under gravity has the shape of a gathered frill folded over on itself, the folds of which run alternately in one direction then in the opposite direction.

9. Device according to Claim 8, **characterized in that** it comprises two nozzles placed one above the other, one of which is inclined with respect to the other, and which are articulated to one another and whose angle of inclination with respect to the horizontal can be adjusted using an adjusting means.

10. Device according to Claim 8, **characterized in that** the oscillating support comprises a first bracket to which the lower nozzle is fixed and to which the upper nozzle is articulated via an arm and **in that** the position of the upper nozzle with respect to the lower nozzle can be adjusted by means of the said adjustable-length arm articulated at its two ends.

11. Device according to Claim 8, **characterized in that** the set of nozzles comprises two moving nozzles with flattened end-piece more or less orthogonal to one another.

12. Device according to Claim 11, **characterized in that** the flattened nozzles are arranged in such a way that their nozzle outlets form an inverted T.

13. Device according to Claim 8, **characterized in that** the upper nozzle comprises a sauce-conveying duct built into the upper end of the end-piece.

14. Device according to Claim 8, **characterized in that** the nozzles are thermostatically controlled by jackets through which a heat-transfer fluid passes.

15. Device according to Claim 8, **characterized in that** the means of setting the oscillating support in motion comprise:
- a moving vertical slideway secured to the said oscillating support via a first bracket,
- a set of rollers between which the slideway slides, the said rollers being fixed to a housing,
- a second bracket for fixing the slideway, and
- a crank with an adjustable lever, the drive shaft of which is connected to a motor and the eye of which is articulated to the second bracket.

## Patentansprüche

1. Verfahren zur Herstellung einer Eistorte mit integrierter Verzierung aus Eiskonfiserie, welche durch Pressen aus zwei bewegbaren Düsen mit abgeflachtem Ende mit schlitzförmigem Mundstück aufgetragen wird, welches über einem vorbeilaufenden Trägermaterial angeordnet ist, wobei die Düsen übereinander angeordnet sind und die eine gegenüber der anderen geneigt ist, wobei sie gelenkig miteinander verbunden sind und ihr Neigungswinkel zur Horizontalen durch ein Einstellmittel verstellt werden kann,
**dadurch gekennzeichnet,**
**dass** eine Speiseeiszusammensetzung kontinuierlich bandförmig auf das vorbeilaufende Trägermaterial extrudiert wird, und zwar mit einer Temperatur, die im Bereich der Spritzdüsen weniger als -6° beträgt,
**dass** die Düsen fest mit einer schwingenden Halterung verbunden sind, die in eine quer zur dem vorbeilaufenden Trägermaterial gerichtete Schwingbewegung versetzt wird,
**dass** die von dem vorbeilaufenden Trägermaterial am weitesten entfernte Düse dergestalt angeordnet ist, dass die Projektion der Ebene des Mundstücks dieser Düse auf eine Ebene, die parallel zur Laufrichtung des vorbeilaufenden Trägermaterials und im rechten Winkel zur Ebene dieses vorbeilaufenden Trägermaterials liegt, in der Laufrichtung dieses Trägermaterials betrachtet einen spitzen Winkel von mindestens 45° mit der Projektion des vorbeilaufenden Trägermaterials auf die genannte Ebene bildet,
**dass** die Extrusionsgeschwindigkeit der Speiseeiszusammensetzung höher ist als die Laufgeschwindigkeit des vorbeilaufenden Trägermaterials, und
**dass** die jeweiligen Bewegungen der Düsen und des vorbeilaufenden Trägermaterials derart beschaffen sind, dass das durch die Schwerkraft aufgetragene Band die Form eines wellenförmig in Falten gelegten Kranzes aufweist, dessen Falten abwechselnd in einer Richtung und dann in der entgegengesetzten Richtung verlaufen.

2. Verfahren nach Anspruch 1,
**dadurch gekennzeichnet,**
**dass** zwei Bänder einer Speiseeiszusammensetzung aus zwei abgeflachten, bewegbaren Düsen extrudiert werden, welche im Wesentlichen senkrecht zu einander angeordnet sind.

3. Verfahren nach Anspruch 2,
**dadurch gekennzeichnet,**
**dass** die abgeflachten Düsen dergestalt angeordnet sind, dass ihre Mundstücke ein umgekehrtes T bilden.

4. Verfahren nach Anspruch 1,
**dadurch gekennzeichnet,**
**dass** das als Letztes aufgetragene Band einer Speiseeiszusammensetzung mit einer Saucenbordüre eingefasst ist, die einen optischen Kontrast zu dem genannten Band bildet.

5. Verfahren nach Anspruch 1,
**dadurch gekennzeichnet,**
**dass** die integrierte Verzierung auf einen Strang Eiscreme aufgetragen wird, und dass der so hergestellte Verbund-Strang in Portionen unterteilt wird.

6. Verfahren nach Anspruch 1 oder 4,
**dadurch gekennzeichnet,**
**dass** die integrierte Verzierung oder der Verbund-Strang auf eine Gebäckmasse aufgetragen wird, und dass die Strang-Gebäckmasse-Gesamtanordnung in Portionen unterteilt wird.

7. Verfahren nach Anspruch 5,
**dadurch gekennzeichnet,**
**dass** die Gebäckmasse ebenfalls extrudiert wird.

8. Vorrichtung zur Herstellung einer Eistorte mit einer integrierten Verzierung aus Speiseeisware, die in der Form eines wellenförmig gefalteten Kranzes, dessen Falten abwechselnd in einer Richtung und dann in der entgegengesetzten Richtung verlaufen, durch Extrudieren aus einer bewegbaren Anordnung von zwei Düsen mit abgeflachten Enden mit schlitzförmigem Mundstück aufgetragen wird, welche über einem vorbeilaufenden Trägermaterial angeordnet ist, wobei die Düsen übereinander angeordnet sind und die eine gegenüber der anderen geneigt ist, wobei sie gelenkig miteinander verbunden sind und ihr Neigungswinkel zur Horizontalen durch ein Einstellmittel verstellt werden kann,
**dadurch gekennzeichnet,**
**dass** sie folgendes aufweist:
- eine Quelle für eine kalte Speiseeiszusammensetzung, die mindestens ein extrudiertes Band einer Speiseeiszusammensetzung mit einer Temperatur, die weniger als oder gleich -6° beträgt, abgibt,
- eine Halterung der bewegbaren Gesamtanordnung von Düsen, die in eine quer zur dem vorbeilaufenden Trägermaterial gerichtete Schwingbewegung versetzt wird,
- Mittel zum Antrieb der schwingenden Halterung, wobei die von dem vorbeilaufenden Trägermaterial am weitesten entfernte Düse dergestalt angeordnet ist, dass die Projektion der Ebene des Mundstücks dieser Düse auf eine Ebene, die parallel zur Laufrichtung des vorbeilaufenden Trägermaterials und im rechten Winkel zur Ebene dieses vorbeilaufenden Trägermaterials liegt, in der Laufrichtung dieses Trägermaterials betrachtet einen spitzen Winkel von mindestens 45° mit der Projektion des vorbeilaufenden Trägermaterials auf die genannte Ebene bildet, wobei die Extrusionsgeschwindigkeit der Speiseeiszusammensetzung höher ist als die Laufgeschwindigkeit des vorbeilaufenden Trägermaterials, und wobei die jeweiligen Bewegungen der Düse(n) und des vorbeilaufenden Trägermaterials derart beschaffen sind, dass das durch die Schwerkraft aufgetragene Band die Form eines wellenförmig in Falten gelegten Kranzes aufweist, dessen Falten abwechselnd in einer Richtung und dann in der entgegengesetzten Richtung verlaufen.

9. Vorrichtung nach Anspruch 8,
**dadurch gekennzeichnet,**
**dass** sie zwei Düsen aufweist, die übereinander angeordnet sind, bei denen die eine gegenüber der anderen geneigt ist, die gelenkig miteinander verbunden sind und deren Neigungswinkel zur Horizontalen durch ein Einstellmittel verstellt werden kann.

10. Vorrichtung nach Anspruch 8,
**dadurch gekennzeichnet,**
**dass** die schwingende Halterung eine erste Haltevorrichtung umfasst, an der die untere Düse befestigt ist und an der die obere Düse vermittels eines Arms angelenkt ist, wobei die Position der oberen Düse zur unteren Düse mittels dieses Arms mit verstellbarer Länge, der an seinen beiden Enden angelenkt ist, eingestellt werden kann.

11. Vorrichtung nach Anspruch 8,
**dadurch gekennzeichnet,**
**dass** die Anordnung von Düsen zwei bewegbare Düsen mit abgeflachtem Ende umfasst, die im Wesentlichen senkrecht zu einander angeordnet sind.

12. Vorrichtung nach Anspruch 11,
**dadurch gekennzeichnet,**
**dass** die abgeflachten Düsen dergestalt angeordnet sind, dass ihre Mundstücke ein umgekehrtes T bilden.

13. Vorrichtung nach Anspruch 8,
**dadurch gekennzeichnet,**
**dass** die obere Düse einen Saucenzufiihrungskanal aufweist, der in das obere Ende des Endstücks integriert ist.

14. Vorrichtung nach Anspruch 8,
**dadurch gekennzeichnet,**
**dass** die Düsen durch Muffen, durch die eine thermische Flüssigkeit fließt, thermostabilisiert sind.

15. Vorrichtung nach Anspruch 8,
**dadurch gekennzeichnet,**
**dass** die Mittel zum Antrieb der schwingenden Halterung folgendes umfassen:
- eine bewegbare, vertikale Gleitschiene, die über eine erste Haltevorrichtung fest mit dieser schwingenden Halterung verbunden ist,
- eine Gesamtanordnung von Rollen, zwischen denen die Gleitschiene gleitet, wobei diese Rollen an einem Gehäuse befestigt sind,
- eine zweite Haltevorrichtung zur Befestigung der Gleitschiene, und
- eine Kurbel mit verstellbarem Hebel, deren Antriebswelle mit einem Motor verbunden ist und deren Auge an der zweiten Haltevorrichtung angelenkt ist.
